(19) Europäisches Patentamt
European Patent Office
Office européen des brevets

(11) **EP 2 410 293 B1**

(12) **FASCICULE DE BREVET EUROPEEN**

(45) Date de publication et mention
de la délivrance du brevet:
**06.11.2019 Bulletin 2019/45**

(51) Int Cl.:
*G01C 21/16* *(2006.01)*        *G01C 25/00* *(2006.01)*
*G01P 21/00* *(2006.01)*        *G12B 5/00* *(2006.01)*

(21) Numéro de dépôt: **11174859.6**

(22) Date de dépôt: **21.07.2011**

(54) **Procédé et système d'harmonisation d'un référentiel d'un positionneur angulaire par rapport à un référentiel terrestre**

Harmonisierungsverfahren und -system eines Referenzsystems eines Winkelpositionierers in Bezug auf ein Erdbezugssystem

Method and system for harmonising an angular positioner reference in relation to an Earth-based reference frame

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2010 FR 1056063**

(43) Date de publication de la demande:
**25.01.2012 Bulletin 2012/04**

(73) Titulaire: **MBDA France**
**92350 Le Plessis-Robinson (FR)**

(72) Inventeur: **Bourzier, Laurent**
**18000 Bourges (FR)**

(74) Mandataire: **Boura, Olivier et al**
**Cabinet Beau de Loménie**
**158, rue de l'Université**
**75340 Paris Cedex 07 (FR)**

(56) Documents cités:
**US-A- 3 597 598        US-A1- 2002 178 815**
**US-A1- 2008 202 199**

EP 2 410 293 B1

**Description**

Arrière-plan de l'invention

L'invention concerne l'harmonisation, par rapport au référentiel terrestre, d'un référentiel d'un positionneur angulaire adapté à recevoir un mobile ou un engin volant dont on souhaite par exemple tester les performances (ex. un missile, un avion, une fusée, etc.).

Par harmonisation du référentiel du positionneur angulaire par rapport au référentiel terrestre, on entend ici l'orientation des axes du positionneur angulaire par rapport aux axes du référentiel terrestre, c'est-à-dire l'orientation d'un axe du référentiel du positionneur angulaire en direction du nord géographique et le positionnement des deux autres axes du référentiel du positionneur angulaire par rapport à la verticale du lieu (i.e. l'un orienté selon la verticale du lieu et l'autre perpendiculaire à cette verticale).

Le positionneur angulaire est par exemple un simulateur de mouvements angulaires, un banc de contrôle ou une table micrométrique. Il peut être notamment utilisé dans le cadre d'une simulation hybride, telle que décrite dans le document FR 2 927 418.

L'invention s'applique ainsi de façon privilégiée mais non limitative au domaine de l'aéronautique.

De façon connue, les mobiles susceptibles d'être embarqués sur ce type de positionneurs angulaires sont classiquement équipés d'un dispositif de mesure d'informations inertielles équipé de gyroscopes, de gyromètres et/ou d'accéléromètres, tel qu'une centrale inertielle. Les informations inertielles délivrées par le dispositif de mesure sont relatives notamment à la vitesse angulaire et/ou à l'accélération du mobile qu'il équipe.

L'harmonisation du référentiel du positionneur angulaire par rapport à un référentiel donné, typiquement par rapport au référentiel terrestre, facilite l'exploitation des informations inertielles délivrées par le dispositif de mesure lors d'une simulation hybride.

Elle permet également de ne pas fausser la navigation du mobile embarqué sur le positionneur angulaire et dont on souhaite tester les performances.

En outre, l'harmonisation des référentiels entre eux assure la répétitivité et la précision des tests effectués sur le mobile (ou sur ses équipements, par exemple sur la centrale inertielle du mobile), garantissant ainsi la fiabilité des résultats de la simulation hybride.

Pour réaliser une telle harmonisation, il est connu de recourir à des équipements coûteux et peu courants tels qu'un chercheur de nord, un théodolite et/ou des niveaux électroniques de précision, comme décrit notamment dans le document FR 2 927 418. L'utilisation de ces équipements nécessite cependant de faire appel à un personnel qualifié.

Or, lorsqu'une réparation est effectuée sur le positionneur angulaire suite à une panne de celui-ci, il arrive que l'on perde la référence du positionneur angulaire par rapport au référentiel terrestre, i.e., le référentiel du positionneur angulaire n'est plus harmonisé par rapport au référentiel terrestre. Il est alors difficile de disposer rapidement des équipements et du personnel nécessaires pour harmoniser de nouveau les référentiels entre eux, ce qui peut être préjudiciable à l'avancement des tests en cours réalisés sur le mobile.

Il existe donc un besoin de disposer d'un procédé d'harmonisation du référentiel du positionneur angulaire par rapport au référentiel terrestre qui ne souffre pas de tels inconvénients, et en particulier qui permette une harmonisation simple et fiable des référentiels entre eux dans un délai relativement court.

Le document US 2002/178815 décrit un procédé et un dispositif d'alignement d'un instrument ayant une ligne de visée et plus particulièrement d'une antenne.

Le document US 3,597,288 décrit une plate-forme inertielle stabilisée pour transformer des signaux d'accélération générés par des accéléromètres dans un premier système de coordonnées en signaux d'accélération dans un second système de coordonnées.

Objet et résumé de l'invention

La présente invention répond à ce besoin en proposant un procédé d'harmonisation d'un référentiel d'un positionneur angulaire par rapport à un référentiel terrestre, selon la revendication 1.

Corrélativement, l'invention vise également un système d'harmonisation, par rapport à un référentiel terrestre, d'un référentiel d'un positionneur angulaire, selon la revendication 5.

L'invention propose ainsi une technique simple, rapide et fiable, pour harmoniser le référentiel du positionneur angulaire avec le référentiel terrestre. A cette fin, elle utilise avantageusement les informations inertielles délivrées par un dispositif de mesure tel qu'une centrale inertielle, classiquement présente sur les mobiles susceptibles d'êtres embarqués sur le positionneur angulaire.

Ainsi, les informations inertielles sont par exemple mesurées à l'aide d'au moins un accéléromètre et/ou d'au moins un gyromètre équipant le dispositif de mesure. La précision du dispositif de mesure utilisé devra être en correspondance avec la précision d'harmonisation recherchée.

L'invention ne nécessite donc pas le recours à des équipements coûteux et difficiles à mettre en œuvre tels qu'un chercheur de nord couplé à un théodolite et/ou des niveaux de précision.

Au cours de l'étape d'obtention, on peut notamment obtenir des données représentatives d'une intensité de pesanteur locale vue par le dispositif de mesure ; il est alors possible d'évaluer, au cours de l'étape d'évaluation, un biais angulaire en site (i.e. entre l'axe longitudinal du positionneur angulaire et le plan horizontal) et/ou en devers (i.e. entre l'axe transversal, perpendiculaire à l'axe longitudinal, et le plan horizontal) à partir de ces données.

Corrélativement les moyens d'obtention sont aptes à obtenir des données représentatives d'une intensité de pesanteur locale vue par le dispositif de mesure et les moyens d'évaluation sont aptes à évaluer un biais angulaire en site et en devers à partir de ces données.

En variante, il est également possible, au cours de l'étape d'obtention, d'obtenir des données représentatives d'une vitesse de rotation terrestre ; on peut alors évaluer, au cours de l'étape d'évaluation, un biais angulaire en cap (i.e. entre l'axe longitudinal du positionneur angulaire et le nord géographique) à partir de ces données.

Corrélativement, les moyens d'obtention peuvent être aptes à obtenir des données représentatives d'une vitesse de rotation terrestre et les moyens d'évaluation peuvent être aptes à évaluer un biais angulaire en cap à partir de ces données.

L'invention permet ainsi de compenser un biais en site et en devers et/ou en cap existant entre le référentiel du positionneur angulaire et le référentiel terrestre.

On notera, que bien que le référentiel du positionneur angulaire n'est pas nécessairement affecté par ces trois types de biais, on envisagera préférentiellement l'existence de ces trois types de biais pour s'assurer d'une harmonisation fiable du référentiel du positionneur angulaire par rapport au référentiel terrestre.

En variante, un contrôle du positionnement des axes non corrigés par l'invention pourra être envisagé en ayant recours à d'autres équipements de précision tels qu'un chercheur de nord couplé à un théodolite et/ou des niveaux de précision.

Dans un mode particulier de réalisation dans lequel au moins un biais angulaire en site et en devers et un biais angulaire en cap sont compensés, la compensation du biais angulaire en site et en devers est réalisée avant la période de fonctionnement durant laquelle les informations inertielles utilisées pour l'évaluation du biais en cap sont mesurées par le dispositif de mesure.

De cette sorte, on évite que des erreurs entachent les informations inertielles utilisées pour l'évaluation du biais en cap, les biais angulaires en site et en devers susceptibles d'affecter le positionneur angulaire ayant été corrigés. La précision de l'harmonisation des référentiels est ainsi améliorée.

Selon l'invention, au cours de l'étape d'obtention, les données représentatives d'une intensité de pesanteur locale vue par le dispositif de mesure et/ou d'une vitesse de rotation terrestre sont obtenues en cumulant les informations inertielles mesurées sur ladite au moins une période de fonctionnement.

Ceci permet notamment de s'affranchir d'effets entachant les informations inertielles délivrées par le dispositif de mesure qui peuvent être discrètes. En effet, en cumulant les informations inertielles sur la période de fonctionnement, on lisse les bruits de mesure. En outre, on peut également ainsi tenir compte des arrondis résultant de la numérisation des informations inertielles.

Dans un mode particulier de réalisation, les différentes étapes du procédé d'harmonisation selon l'invention sont déterminées par des instructions de programmes d'ordinateurs.

En conséquence, l'invention vise aussi un programme d'ordinateur sur un support d'informations, ce programme étant susceptible d'être mis en œuvre dans un système d'harmonisation ou plus généralement dans un ordinateur, ce programme comportant des instructions adaptées à la mise en œuvre des étapes d'un procédé d'harmonisation tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, sous forme schématique, un système d'harmonisation conforme à l'invention, dans un mode particulier de réalisation ;
- la figure 2 représente, sous forme d'organigramme, les principales étapes d'un procédé d'harmonisation conforme à l'invention, dans un mode particulier de réalisation dans lequel il est mis en œuvre par le système représenté sur la figure 1 ;
- les figures 3A et 3B représentent des exemples de biais en site et en devers affectant le référentiel d'un positionneur angulaire ;
- les figures 4A à 4C représentent des exemples d'informations inertielles (différences de vitesses linéaires) cumulées sur une première période de fonctionnement pour l'évaluation des biais en site et en devers représentés sur les figures 3A et 3B ;
- les figures 5A et 5B représentent un exemple de biais en cap affectant le référentiel d'un positionneur angulaire ; et
- les figures 6A à 6C représentent des exemples d'informations inertielles (différences d'angles) cumulées sur une seconde période de fonctionnement pour l'évaluation du biais en cap représenté sur les figures 5A et 5B.

Description détaillée d'un mode de réalisation

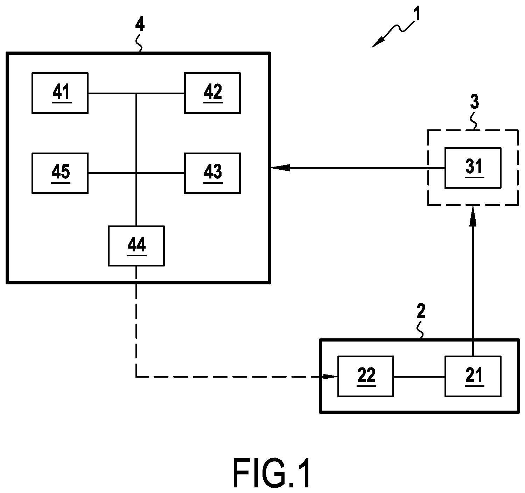

La **figure 1** représente un système 1 d'harmonisation d'un référentiel d'un positionneur angulaire 2 par rapport à un référentiel terrestre, conforme à l'invention, dans un mode particulier de réalisation.

Comme mentionné précédemment, par harmonisation du référentiel du positionneur angulaire 2 par rapport au référentiel terrestre, on entend ici l'orientation des axes du positionneur angulaire 2 par rapport aux axes du référentiel terrestre, c'est-à-dire par rapport au nord géographique et à la verticale du lieu où se trouve le positionneur angulaire.

L'harmonisation du référentiel du positionneur angulaire 2 par rapport au référentiel terrestre peut être mis en œuvre par le système 1 notamment suite à une réparation du positionneur angulaire ou à une opération de maintenance réalisée sur le positionneur angulaire et qui a introduit un ou plusieurs biais angulaires entre le référentiel du positionneur angulaire et le référentiel terrestre.

Dans l'exemple envisagé ici, le positionneur angulaire 2 est un simulateur de mouvements angulaires comprenant une table « 3 axes » 21, commandée à l'aide d'un boîtier de commande numérique 22 et adaptée à recevoir un mobile ou engin volant 3.

Le mobile 3 peut être notamment un missile, un drone, un avion, une fusée, etc. Il est classiquement équipé d'une centrale inertielle 31 embarquant des outils de mesure tels que des gyromètres (ou des gyroscopes) et des accéléromètres (non représentés sur la figure 1), permettant à la centrale inertielle de fournir des informations inertielles gyrométriques et accélérométriques lorsque celle-ci est en fonctionnement.

Dans le mode de réalisation envisagé ici, seule la centrale inertielle 31 est embarquée sur le simulateur de mouvements, pour simplifier la mise en œuvre de l'invention. La centrale inertielle 31 constitue un dispositif de mesure d'informations inertielles embarqué par le positionneur angulaire 2 au sens de l'invention.

Toutefois, en variante, d'autres éléments réels du mobile 3 pourraient également être embarqués sur le simulateur de mouvements, comme par exemple le calculateur ou un équipement de guidage du mobile.

En outre, l'invention s'applique également à d'autres positionneurs angulaires tels que par exemple un simulateur de mouvements angulaires comprenant une table « 5 axes », une table micrométrique ou un banc de contrôle, embarquant des dispositifs de mesure d'informations inertielles.

Le simulateur de mouvements angulaires 2 peut réaliser ici des déplacements angulaires autour d'un axe longitudinal X (roulis), d'un axe transversal Y (tangage) et d'un axe vertical Z (lacet), et ainsi appliquer sur la centrale inertielle 31 des mouvements angulaires autour de ces trois axes. Ces mouvements angulaires sont appliqués par la table 21 en fonction de commandes cinématiques numériques reçues du boîtier 22.

Les commandes cinématiques numériques reçues du boîtier 22 comprennent notamment une position angulaire, exprimée sous la forme de trois composantes, correspondant respectivement aux trois axes du simulateur de mouvements. Elles peuvent également comprendre une vitesse et une accélération angulaires.

Le principe de fonctionnement d'une table « 3 axes » étant connu de l'homme du métier, il ne sera pas décrit plus en détails ici.

Au sens de l'invention, on considèrera que le simulateur de mouvements 2 est maintenu fixe lorsqu'il ne réalise aucun déplacement angulaire, autrement dit, lorsqu'il n'applique aucun mouvement angulaire sur la centrale inertielle 31 et maintient celle-ci dans une position fixe dite de référence.

De manière générale, les informations inertielles mesurées par les gyromètres et les accéléromètres de la centrale inertielle 31 sont représentatives d'une part, des effets des mouvements appliqués par le simulateur de mouvements 2 sur la centrale inertielle, et d'autre part, des effets terrestres (intensité de la pesanteur locale et vitesse de rotation terrestre) vus par la centrale inertielle. Il en découle donc que lorsque le simulateur de mouvements 2 est maintenu immobile et n'applique aucun mouvement sur la centrale inertielle 31, ces informations inertielles représentent uniquement les effets terrestres vus par la centrale inertielle.

Les informations inertielles mesurées par la centrale inertielle 31 sont fournies ici à un dispositif informatique ou ordinateur 4, via des liaisons électroniques et mécaniques connues en soi.

Le dispositif informatique 4 comprend notamment une mémoire vive 41, une mémoire morte 42 et une mémoire non volatile 43. Il dispose également de moyens de communication 44 avec le simulateur de mouvements 2 (ex. port série ou parallèle relié au boîtier 22 de commande du simulateur de mouvements), ainsi que d'un processeur 45. Les moyens de communication 44 du dispositif informatique 4 et le boîtier de commande 22 sont reliés par des liaisons mécaniques et électroniques connues en soi et non décrites ici.

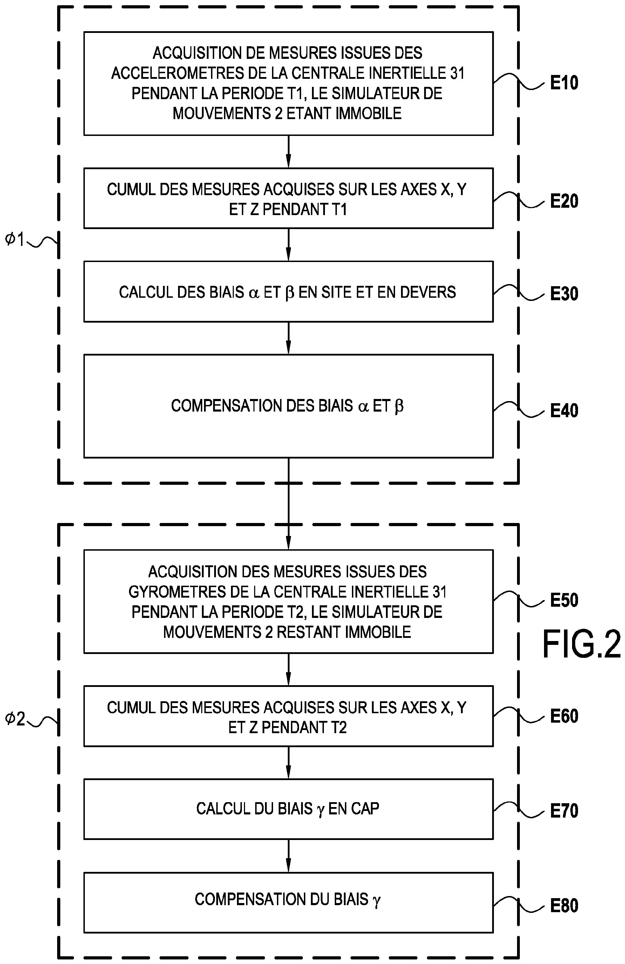

La mémoire morte 42 constitue un support d'enregistrement lisible par le processeur 45 et sur lequel est enregistré un programme d'ordinateur comportant des instructions pour l'exécution des étapes du procédé d'harmonisation selon l'invention décrites maintenant en référence à la **figure 2.**

Dans le mode de réalisation décrit ici, on envisage l'harmonisation des trois axes mobiles X, Y et Z du référentiel du simulateur de mouvements 2 par rapport au référentiel terrestre. Toutefois, l'invention s'applique également à un positionneur angulaire ayant seulement un ou deux axes mobiles. Dans un tel cas, les axes immobiles du positionneur angulaire pourront être positionnés au préalable par des instruments de précision, lors par exemple de la construction de l'installation intégrant le positionneur angulaire.

En outre, par souci de simplification, on suppose ici que les axes du simulateur de mouvements 2 et les axes de la centrale inertielle 31 sont parallèles ou confondus. On désignera par (X,Y,Z) le référentiel de la centrale inertielle 31.

Ainsi, en évaluant les biais angulaires existant entre les axes X, Y et Z de la centrale inertielle 31 et le référentiel terrestre, on évalue les biais angulaires existant entre le référentiel du simulateur de mouvements angulaires 2 et le référentiel terrestre. Bien entendu, l'invention s'applique également quand un ou plusieurs écarts angulaires connus entre les axes du simulateur de mouvements 2 et les axes de la centrale inertielle 31 existent, moyennant la prise en compte de ces écarts.

Pour réaliser l'harmonisation des trois axes du simulateur de mouvements 2 par rapport au référentiel terrestre, on procède ici en deux phases successives Φ1 et Φ2. Plus précisément :

- au cours de la phase Φ1, on identifie et on compense des biais angulaires en site et en devers susceptibles d'affecter le positionnement des axes du simulateur de mouvements par rapport à la verticale du lieu ; et
- au cours de la phase Φ2, on identifie et on compense un biais angulaire en cap susceptible d'affecter le positionnement des axes du simulateur de mouvements par rapport au nord géographique.

La phase Φ2 succèdera à la phase Φ1 afin d'éviter que les biais angulaires en site et en devers n'entachent les mesures inertielles utilisées pour la compensation du biais en cap. On obtient ainsi, à l'issue de la phase Φ2, une harmonisation fiable du référentiel du simulateur de mouvements par rapport au référentiel terrestre.

Pour identifier les biais en site, en devers et en cap susceptibles d'affecter les axes du simulateur de mouvements par rapport au référentiel terrestre, l'invention propose avantageusement d'utiliser les mesures fournies par la centrale inertielle 31 alors que le simulateur de mouvements 2 est maintenu fixe. Comme mentionné précédemment, dans ce cas, les informations inertielles mesurées par la centrale inertielle 31 reflètent les effets terrestres s'appliquant sur la centrale inertielle. En particulier, les informations inertielles mesurées par les accéléromètres de la centrale inertielle traduisent l'intensité de la pesanteur locale s'exerçant sur la centrale inertielle, tandis que les informations inertielles mesurées par les gyromètres de la centrale inertielle traduisent la vitesse de rotation terrestre.

Nous allons maintenant décrire plus en détails le déroulement des deux phases Φ1 et Φ2.

Le simulateur de mouvements 2 et la centrale inertielle 31 sont mis en fonctionnement.

Par souci de simplification, le simulateur de mouvements 2 est réglé de telle sorte que lorsqu'il maintient la centrale inertielle 31 dans sa position de référence Pref, la mesure délivrée par le boîtier de commande numérique 22 pour chaque axe est égale à zéro. En variante, un autre réglage peut être envisagé dès lors qu'il est pris en compte ultérieurement au cours de l'harmonisation, de façon connue en soi.

Pour assurer le fonctionnement de la centrale inertielle 31, on déroule ici, à l'aide d'une simulation informatique mise en œuvre par le dispositif informatique 4, une trajectoire du mobile 3, selon un principe similaire à celui décrit par exemple dans le document FR 2 927 418.

En variante, tout autre moyen, par exemple informatique, permettant de maintenir en fonctionnement le simulateur de mouvements 2 et la centrale inertielle 31 peut être envisagé.

Le déroulement de la trajectoire couvre une période suffisamment longue pour assurer le fonctionnement de la centrale inertielle 31 pendant au moins deux périodes de fonctionnement T1 et T2 de durées prédéterminées, associées respectivement aux phases Φ1 et Φ2.

En variante, deux trajectoires distinctes du mobile 3 pourront être déroulées par le dispositif informatique 4 de sorte à assurer le fonctionnement de la centrale inertielle respectivement pendant les périodes de fonctionnement T1 et T2.

Pendant toute la durée des deux périodes de fonctionnement T1 et T2 rencontrées au cours de la trajectoire déroulée par le dispositif informatique 4, on s'assure que le simulateur de mouvements 2 ne reçoive aucune commande numérique du dispositif informatique 4 : le simulateur de mouvements 2 est ainsi maintenu fixe et la centrale inertielle 31 se trouve dans sa position de référence Pref. Autrement dit, durant le déroulement des deux périodes de fonctionnement T1 et T2 rencontrées au cours de la trajectoire, le simulateur de mouvements 2 n'applique aucun mouvement à la centrale inertielle 31 et la maintient dans sa position de référence Pref.

Ainsi, pendant la durée des deux périodes de fonctionnement T1 et T2 rencontrées au cours de cette trajectoire, les informations inertielles mesurées et fournies par la centrale inertielle 31 sont exclusivement liées aux effets terrestres exercés sur la centrale inertielle. Plus précisément, la centrale inertielle 31 fournit, dans son repère orthonormé (X,Y,Z) :

- des informations inertielles mesurées par ses accéléromètres selon les axes (X,Y,Z) de la centrale inertielle, et notées dVX, dVY et dVZ ; et
- des informations inertielles mesurées par ses gyromètres autour des axes (X,Y,Z) de la centrale inertielle, et notées dθX, dθY et dθZ.

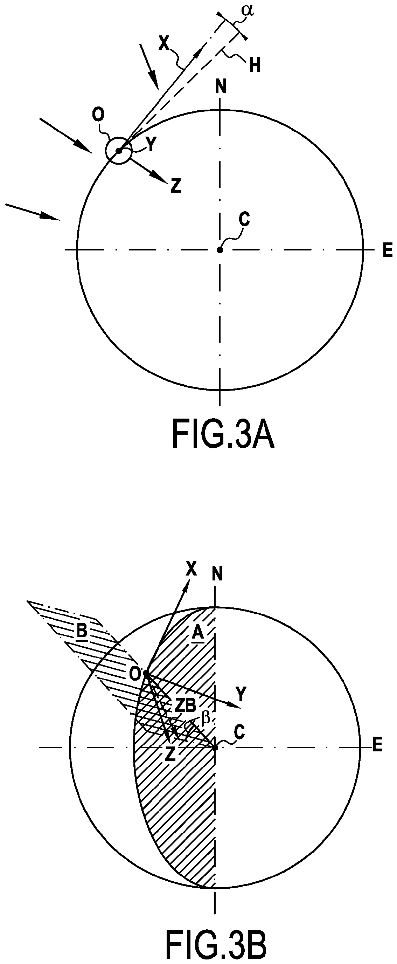

Un exemple de positionnement des axes (X,Y,Z) de la centrale inertielle 31 avant harmonisation est représenté sur les **figures 3A et 3B,** sur lesquelles :

- les points O et C désignent respectivement le point de concourt des trois axes X, Y et Z et le centre de la Terre ;
- les axes N et E désignent respectivement le nord géographique et l'équateur ; et
- le plan H représente le plan horizontal perpendiculaire à la verticale du lieu au point O.

On notera que préférentiellement, l'invention sera mise en œuvre avec des équipements (simulateur de mouvements 2, centrale inertielle 31, etc.) ayant fonctionné auparavant suffisamment longtemps pour avoir atteint une température interne de fonctionnement qui varie peu au cours des mesures réalisées pour évaluer et compenser les biais angulaires affectant le référentiel du simulateur de mouvements.

Comme mentionné précédemment, au cours de la phase Φ1, l'invention propose d'identifier et de compenser les biais angulaires en site et en devers susceptibles d'exister entre les axes de la centrale inertielle et ceux du référentiel terrestre.

A cette fin, en référence aux figures 3A et 3B, l'invention utilise avantageusement le fait que la pesanteur (représentée par des flèches en gras sur la figure 3A) est un effet terrestre qui s'applique radialement et est dirigé vers le centre C de la Terre, autrement dit selon la verticale du lieu. Les informations inertielles fournies par les accéléromètres de centrale inertielle 31 reflétant l'intensité de la pesanteur s'exerçant au point O, les axes du simulateur de mouvements seront correctement orientés par rapport à la verticale du lieu si et seulement si seule l'information inertielle selon l'axe Z de la centrale inertielle est non nulle. Autrement dit, si la centrale inertielle 31 mesure une accélération non nulle (ou non proche de zéro en fonction de la précision des mesures) sur plus d'un de ses axes, c'est que son axe Z n'est pas harmonisé avec la verticale du lieu, et que les axes X et Y ne sont pas inclus dans le plan horizontal H perpendiculaire à la verticale du lieu.

En référence aux figures 3A et 3B, dans la suite de la description, on désignera :

- par α, l'écart (ou biais) angulaire existant entre l'axe X de la centrale inertielle 31 et le plan horizontal H. L'angle α représente, au sens de l'invention, le biais en site du référentiel de la centrale inertielle (et donc ici du simulateur de mouvements 2) par rapport au référentiel terrestre (cf. figure 3A) ; et
- par β, l'écart angulaire existant entre l'axe ZB et la droite (OC) (cf. figure 3B), sachant que :

    ◦ l'axe ZB est la projection de l'axe Z sur le plan B ; et
    ◦ le plan B est le plan perpendiculaire au plan A contenant la droite (OC), le plan A étant le plan méridien contenant la droite (OC).

L'angle β représente, au sens de l'invention, le biais en devers du référentiel de la centrale inertielle (et donc du simulateur de mouvements 2) par rapport au référentiel terrestre.

En référence à la figure 2, le dispositif informatique 4 acquiert des informations inertielles dVX(t+kxTe), dVY(t+kxTe) et dVZ(t+kxTe), mesurées et fournies par les accéléromètres de la centrale inertielle 31 à divers instants d'échantillonnage t+kxTe pendant la période de fonctionnement T1, Te désignant la période d'échantillonnage et k un entier positif (étape E10). On suppose ici que la durée de la période de fonctionnement T1 est de N1 périodes d'échantillonnage, soit N1×Te.

Les informations inertielles dVX, dVY et dVZ caractérisent des différences de vitesses mesurées sur une durée connue. Dans le mode de réalisation décrit ici, ces informations inertielles sont discrétisées par la centrale inertielle. Elles permettent l'évaluation d'accélérations linéaires, exprimées en unités du fait de la discrétisation, sur ladite durée connue (i.e. en multipliant les informations inertielles par le pas de numérisation exprimé par exemple en mètre par seconde, et en divisant le résultat de cette multiplication par la durée de mesure exprimée en secondes). Ces accélérations linéaires représentent une mesure de l'intensité de la pesanteur locale répartie selon les trois axes (X,Y,Z) de la centrale inertielle.

Plus précisément, les mesures dVX(t+kxTe), dVY(t+kxTe) et dVZ(t+kxTe) délivrées par la centrale inertielle caractérisent l'évolution de la vitesse perçue par les accéléromètres de la centrale inertielle 31 entre deux instants d'échantillonnage successifs t+(k-1)×Te et t+k×Te (0<k≤N1). Il s'agit, dans le mode de réalisation décrit ici, d'informations numérisées, c'est-à-dire discrètes : chaque mesure fournie par la centrale inertielle au dispositif informatique 4 se présente ainsi sous la forme d'un nombre entier, de sorte que le différentiel de vitesses réellement associé à cette mesure est obtenu, à un reste de numérisation près, en multipliant la mesure par le pas de numérisation noté δ.

Ainsi, le différentiel de vitesses dVX1(t+k×Te) réellement mesuré sur l'axe X de la centrale inertielle 31 à l'instant t+k×Te, est égale à :

$$dVX1(t + k \times Te) = dVX(t + k \times Te) \times \delta + \eta X$$

ηX caractérisant le reste de numérisation, qui est inférieur au pas de numérisation.

De même, les différentiels de vitesses dVY1(t+k×Te) et dVZ1(t+k×Te), réellement mesurés sur les axes Y et Z respectivement de la centrale inertielle 31 à l'instant t+kTe, sont égaux à :

$$dVY1(t + k \times Te) = dVY(t + k \times Te) \times \delta + \eta Y$$

$$dVZ1(t + k \times Te) = dVZ(t + k \times Te) \times \delta + \eta Z$$

ηY et ηZ caractérisant les restes de numérisation, inférieurs au pas de numérisation.

On notera que dans le mode de réalisation décrit ici, les restes de numérisations ηX, ηY et ηZ sont ajoutés par la centrale inertielle 31, avant numérisation, aux différentiels de vitesses mesurés pour l'instant d'échantillonage suivant.

Les mesures discrètes délivrées par les accéléromètres de la centrale inertielle vont donc présenter une variation en fonction du temps liée à la numérisation, ainsi qu'à la présence de bruit de mesure.

Pour lisser ces effets et exploiter de façon fiable les informations inertielles discrètes dVX, dVY et dVZ fournies par la centrale inertielle 31, un traitement est mis en oeuvre, dans le mode de réalisation décrit ici, par l'ordinateur 4.

Plus précisément, on évalue pour chaque axe X, Y et Z, à chaque instant t+n×Te durant la période T1 (i.e. 0<k≤N1), le cumul des informations inertielles discrètes acquises aux instants précédents (étape E20). Puis, on calcule, à partir des cumuls ainsi obtenus, une estimation de l'accélération mesurée par la centrale inertielle sur la période T1 pour les trois axes, notée respectivement AX1, AY1 et AZ1.

Ainsi, on évalue, pour chaque instant d'échantillonnage t+n×Te de la période T1 (i.e. 0<n≤N1), les valeurs cumulées CumuldVX, CumuldVY et CumuldVZ suivantes :

$$CumuldVX(t + nTe) = \sum_{k=1}^{n} dVX(t + kTe)$$

$$CumuldVY(t + nTe) = \sum_{k=1}^{n} dVY(t + kTe)$$

$$CumuldVZ(t + nTe) = \sum_{k=1}^{n} dVZ(t + kTe)$$

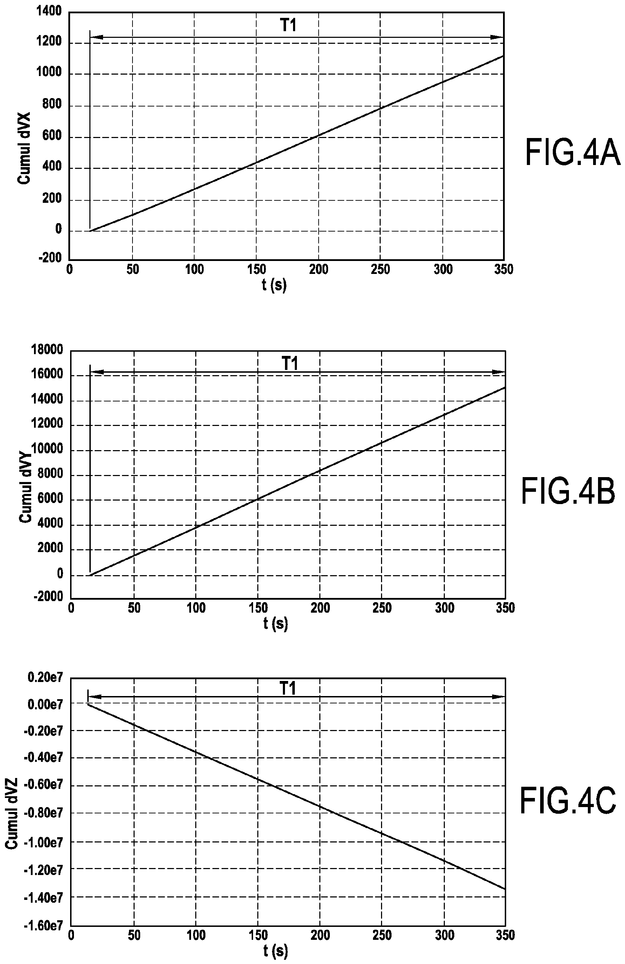

Les **figures 4A à 4C** donnent un exemple des valeurs CumuldVX, CumuldVY et CumuldVZ obtenues en fonction du temps sur la période de fonctionnement T1. Les valeurs numériques ne sont données qu'à titre indicatif.

On observe sur les figures 4A et 4B que les cumuls CumuldVX et CumuldVY des informations inertielles discrètes dVX et dVY ne sont pas nuls sur les axes X et Y de la centrale inertielle : ceci confirme l'existence de biais angulaires en site α et en devers β entre les axes de la centrale inertielle 31 et le référentiel terrestre. L'obtention d'une valeur cumulée CumuldVZ non nulle sur l'axe Z est revanche attendue compte-tenu du fait que l'intensité de pesanteur locale s'applique selon l'axe Z.

Puis, on évalue à partir des cumuls ainsi calculés, une estimation de l'accélération, mesurée sur chaque axe pendant la période T1 de durée N1×Te, selon les équations suivantes (étape E20) :

$$AX1 = CumuldVX(t + N1 \times Te) \times \frac{\delta}{N1 \times Te} \quad (1)$$

$$AY1 = CumuldVY(t + N1 \times Te) \times \frac{\delta}{N1 \times Te} \quad (2)$$

$$AZ1 = CumuldVZ(t + N1 \times Te) \times \frac{\delta}{N1 \times Te} \quad (3)$$

Les données AX1, AY1 et AZ1 constituent des données représentatives d'une intensité de pesanteur locale vue par la centrale inertielle 31 au sens de l'invention.

La période T1 sera choisie suffisamment longue (i.e. N1 suffisamment grand) pour réduire les effets de la numérisation et des bruits de mesure. Un tel choix ne posera pas de difficulté à l'homme du métier.

Pour évaluer les biais α et β, l'invention s'appuie sur le fait que de façon connue, en présence des biais angulaires α et β, l'accélération que devrait théoriquement mesurer la centrale inertielle 31 s'exprime sur les axes X, Y et Z en fonction de l'intensité G de la pesanteur locale. Plus précisément, si l'on désigne respectivement par AX2, AY2 et AZ2 cette accélération sur les axes X, Y, Z :

$$AX2 = -G\sin\alpha \quad (4)$$

$$AY2 = G\sin\beta\cos\alpha \quad (5)$$

$$AZ2 = G\cos\beta\cos\alpha \quad (6)$$

On pourra prendre comme valeur de G, en première approximation :

$$G = 9.7803 + 0.0519\sin^2(Lat) + 3.08 \times 10^{-6} \times Alt$$

*Lat* et *Alt* désignant respectivement la latitude et l'altitude (connues) du lieu considéré (i.e. où se trouvent le simulateur de mouvements 2 et la centrale inertielle 31). On notera que dans cette expression, l'altitude *Alt* est exprimée dans un repère dit aéronautique dans lequel l'axe Z est dirigé vers le bas (de cette sorte l'altitude d'un point situé au-dessus du niveau de la mer est négative).

En variante, la valeur de G pourra être évaluée à l'aide d'algorithmes de calcul de l'intensité de la pesanteur locale plus précis, connus de l'homme du métier et non détaillés ici, en fonction de la précision recherchée dans le cadre de l'application considérée.

Il découle des équations (4), (5) et (6) que :

$$\beta = \arctan\left(\frac{AY2}{AZ2}\right) \quad (7)$$

$$\alpha = \arcsin\left(-\frac{AX2}{G}\right) \quad (8)$$

Une estimation des valeurs des biais angulaires $\alpha$ et $\beta$ est alors obtenue par l'ordinateur 4 en remplaçant dans les équations (7) et (8) les variables AX2, AY2 et AZ2 par les données AX1, AY1 et AZ1 obtenues grâce aux équations (1), (2) et (3) (étape E30).

La compensation des biais ainsi estimés est alors réalisée ici par l'ordinateur 4 en envoyant, via les moyens de communication 44 au boîtier de contrôle 22 du simulateur de mouvements 2, l'opposé de la valeur des angles $\alpha$ et $\beta$ ainsi évalués (étape E40).

Sur réception de l'opposé des valeurs des angles $\alpha$ et $\beta$, le simulateur de mouvements 2 applique à la centrale inertielle 31 ces valeurs, de sorte à modifier sa position de référence Pref et à corriger les biais angulaires existant avec le référentiel terrestre. La nouvelle position de référence Pref' de la centrale inertielle 31 est alors harmonisée par rapport à la verticale du lieu.

En variante, l'incorporation des angles (-$\alpha$) et (-$\beta$) dans le boîtier 22 peut être effectué par un opérateur.

Cette étape clôture la phase $\Phi 1$. A l'issue de cette phase, les axes de la centrale inertielle 31, et donc ceux du simulateur de mouvements 2, sont harmonisés avec la verticale du lieu.

Dans le mode de réalisation envisagé ici, suite à la phase $\Phi 1$ visant à corriger les biais angulaires en site et en devers affectant le référentiel du simulateur de mouvements 2, la phase $\Phi 2$ visant à corriger un éventuel biais angulaire en cap affectant le référentiel du simulateur de mouvements est mise en œuvre.

La phase $\Phi 2$ diffère de la phase $\Phi 1$ en ce qu'elle utilise, pour estimer la valeur du biais en cap $\gamma$ affectant le référentiel de la centrale inertielle 31 et du simulateur de mouvements 2 par rapport au nord géographique, les informations inertielles d$\theta$X, d$\theta$Y et d$\theta$Z mesurées et fournies par les gyromètres de la centrale inertielle, pendant une période de fonctionnement T2.

Les informations inertielles d$\theta$X, d$\theta$Y et d$\theta$Z caractérisent des différences d'angles mesurées sur une durée connue. Dans le mode de réalisation décrit ici, ces informations inertielles sont discrétisées par la centrale inertielle. Elles permettent l'évaluation de vitesses angulaires, exprimées en unités du fait de la discrétisation, sur ladite durée connue. Ces vitesses angulaires reflètent la vitesse de rotation terrestre répartie selon les trois axes (X,Y,Z) de la centrale inertielle.

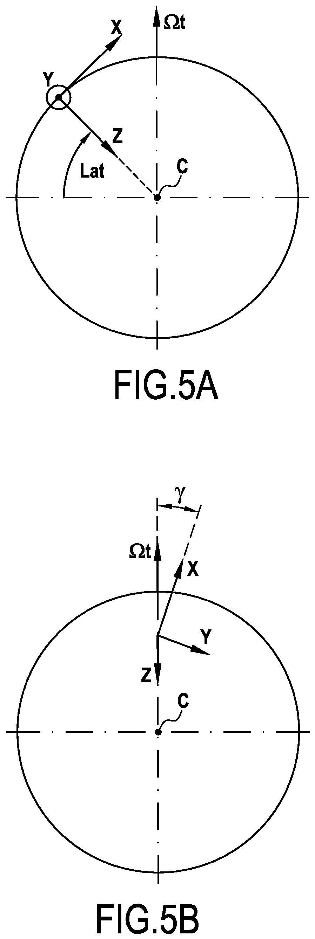

Les **figures 5A et 5B** illustrent le vecteur de rotation terrestre $\Omega t$ et le référentiel (X,Y,Z) de la centrale inertielle, après correction des biais en site et en devers $\alpha$ et $\beta$. Sur ces figures :

- Lat désigne la latitude du lieu où se trouve le simulateur de mouvements 2 embarquant la centrale inertielle 31 ; et
- $\gamma$ désigne l'angle en cap affectant le référentiel (X,Y,Z) de la centrale inertielle par rapport au nord géographique.

Pour évaluer l'angle $\gamma$, l'invention utilise avantageusement le fait que lorsque les référentiels sont harmonisés, la centrale inertielle 31 doit théoriquement mesurer une valeur de rotation terrestre GY2 nulle sur son axe Y. En outre, les informations inertielles que devraient théoriquement mesurer les gyromètres de la centrale inertielle 31, en l'absence de biais angulaire en cap, s'expriment pour les axes X et Z sous la forme :

$$GX2 = \|\Omega t\| \times \cos(Lat) \quad (9)$$

$$GZ2 = -\|\Omega t\| \times \sin(Lat) \quad (10)$$

où $\|\Omega t\|$ désigne la norme du vecteur $\Omega t$.

En présence d'un biais angulaire en cap par rapport au nord géographique, la vitesse de rotation théoriquement mesurée par les gyromètres de la centrale inertielle 31 sur l'axe Y s'exprime sous la forme suivante :

$$GY2 = -\|\Omega t\| \times \cos(Lat) \times \sin(\gamma) \quad (11)$$

Il découle de l'équation (11) que :

$$\gamma = \arcsin\left[-\frac{GY2}{\|\Omega t\| \times \cos(Lat)}\right] \qquad (12)$$

Ainsi, en référence à la figure 2, de façon similaire à la phase Φ1, pour évaluer l'angle en cap γ, on procède de la manière suivante.

En premier lieu, le dispositif informatique 4 acquiert des informations inertielles dθX(t+k×Te), dθY(t+k×Te) et dθZ(t+k×Te), mesurées et fournies par les gyromètres de la centrale inertielle 31 à divers instants d'échantillonnage t+kxTe pendant la période de fonctionnement T2 (étape E50). On suppose ici que la durée de la période de fonctionnement T2 est de N2 périodes d'échantillonnage soit N2×Te.

Comme pour la période T1 durant la période T2, on s'assure que le simulateur de mouvements 2 ne reçoive aucune commande numérique du dispositif informatique 4 : le simulateur de mouvements 2 est ainsi maintenu fixe et la centrale inertielle 31 se trouve dans sa position de référence Pref' (i.e. position de référence corrigée des biais angulaires α et β). Autrement dit, durant la période T2, le simulateur de mouvements 2 n'applique aucun mouvement à la centrale inertielle 31 et la maintient dans sa position de référence Pref'.

Les informations inertielles dθX(t+k×Te), dθY(t+k×Te) et dθZ(t+k×Te) sont représentatives du déplacement angulaire perçu par les gyromètres de la centrale inertielle 31 entre deux instants d'échantillonnage successifs, et mesuré respectivement selon les trois axes (X,Y,Z) de la centrale inertielle. Il s'agit dans le mode de réalisation décrit ici, comme pour les informations dVX, dVY et dVZ, d'informations numérisées, c'est-à-dire discrètes : chaque mesure fournie par la centrale inertielle 31 au dispositif informatique 4 se présente ainsi sous la forme d'un nombre entier, de sorte que la vitesse de rotation réellement associée à cette mesure peut être obtenue, à un reste de numérisation près, en multipliant la mesure par le pas de numérisation δ' (exprimé par exemple en radians), et en divisant le résultat de cette multiplication par la durée (Te) pendant laquelle est réalisée la mesure, exprimée en secondes.

Le différentiel d'angles dθX1(t+kxTe) réellement mesuré sur l'axe X de la centrale inertielle 31 à l'instant t+k×Te, est égal à :

$$d\theta X1(t + k \times Te) = d\theta X(t + k \times Te) \times \delta' + \eta X'$$

ηX' caractérisant le reste de numérisation, inférieur au pas de numérisation.

De même, les différentiels d'angles dθY1(t+k×Te) et dθZ1(t+k×Te), réellement mesurés sur les axes Y et Z respectivement de la centrale inertielle 31 à l'instant t+kTe, sont égaux à :

$$d\theta Y1(t + k \times Te) = d\theta Y(t + k \times Te) \times \delta' + \eta Y'$$

$$d\theta Z1(t + k \times Te) = d\theta Z(t + k \times Te) \times \delta' + \eta Z'$$

ηY' et ηZ' caractérisant les restes de numérisation inférieurs au pas de numérisation.

On notera que dans le mode de réalisation décrit ici, comme pour les différentiels de vitesses dVX, dVY et dVZ, les restes de numérisations ηX', ηY' et ηZ' sont ajoutés par la centrale inertielle 31, avant numérisation, aux différentiels d'angles mesurés pour l'instant d'échantillonnage suivant.

Les mesures discrètes délivrées par les gyromètres de la centrale inertielle 31 vont donc présenter une variation en fonction du temps liée à la numérisation, ainsi qu'à la présence de bruit de mesure.

Pour lisser ces effets et exploiter de façon fiable les informations inertielles discrètes dθX, dθY et dθZ fournies par la centrale inertielle 31, un traitement similaire à celui décrit pour les informations dVX, dVY et dVZ, est mis en œuvre par l'ordinateur 4.

Plus précisément, on évalue pour chaque axe X, Y et Z, à chaque instant t+k×Te durant la période T2 (0<k≤N2), le cumul des informations inertielles discrètes acquises aux instants précédents (étape E60).

Puis, on calcule, à partir des cumuls ainsi obtenus, une estimation de la vitesse de rotation vue par la centrale inertielle sur la période T2 pour les trois axes, notée respectivement GX1, GY1 et GZ1.

Ainsi, on évalue, pour chaque instant d'échantillonnage t+n×Te de la période T2 (0<n≤N2), les valeurs cumulées CumuldθX, CumuldθY et CumuldθZ suivantes :

$$Cumuld\theta X(t + n \times Te) = \sum_{k=1}^{n} d\theta X(t + k \times Te)$$

$$Cumuld\theta Y(t + n \times Te) = \sum_{k=1}^{n} d\theta Y(t + k \times Te)$$

$$Cumuld\theta Z(t + n \times Te) = \sum_{k=1}^{n} d\theta Z(t + k \times Te)$$

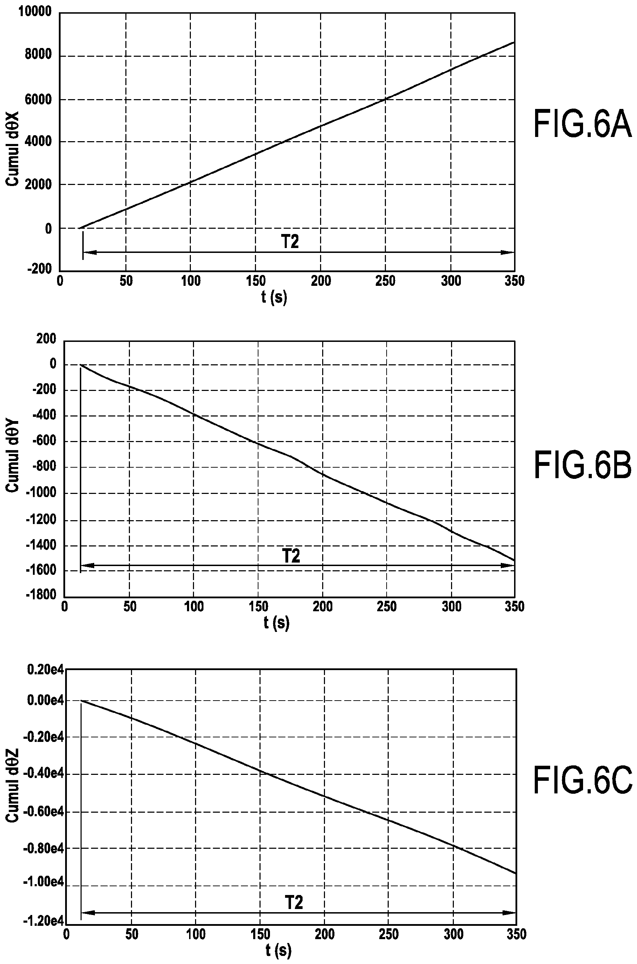

Les **figures 6A à 6C** donnent un exemple des valeurs Cumuld$\theta$X, Cumuld$\theta$Y et Cumuld$\theta$Z obtenues en fonction du temps sur la période de fonctionnement T2. Les valeurs numériques ne sont données qu'à titre indicatif.

On observe sur la figure 6B que le cumul Cumuld$\theta$Y des informations inertielles discrètes d$\theta$Y n'est pas nul sur l'axe Y de la centrale inertielle : ceci confirme l'existence d'un biais angulaire en cap $\gamma$ entre les axes de la centrale inertielle 31 et les axes du référentiel terrestre.

Puis, on évalue à partir des cumuls ainsi calculés, une estimation de la vitesse de rotation, mesurée sur chaque axe pendant la période T2 de durée N2xTe, selon les équations suivantes (étape E60) :

$$GX1 = Cumuld\,\theta X(t + N2 \times Te) \times \frac{\delta'}{N2 \times Te} \quad (13)$$

$$GY1 = Cumuld\,\theta Y(t + N2 \times Te) \times \frac{\delta'}{N2 \times Te} \quad (14)$$

$$GZ1 = Cumuld\,\theta Z(t + N2 \times Te) \times \frac{\delta'}{N2 \times Te} \quad (15)$$

Les données GX1, GY1 et GZ1 constituent des données représentatives d'une vitesse de rotation terrestre vue par la centrale inertielle 31 au sens de l'invention.

La période T2 sera choisie suffisamment longue (i.e. N2 suffisamment grand) pour réduire les effets de la numérisation et des bruits de mesure. Un tel choix ne posera pas de difficulté à l'homme du métier.

Une estimation de la valeur du biais angulaire $\gamma$ est alors obtenue par l'ordinateur 4 en remplaçant dans l'équation (12) la variable GY2 par la valeur GY1 obtenue grâce à l'équation (14) (étape E70). La valeur de $\|\Omega t\|$ est connue par ailleurs de l'homme du métier.

On notera que l'évaluation de la valeur du biais angulaire $\gamma$ ne nécessite pas, à proprement parler, l'évaluation des données GX1 et GZ1, la valeur de la vitesse de rotation terrestre $\|\Omega t\|$ étant connue en soi. Ainsi, dans une variante de réalisation, l'étape E60 peut ne comporter que l'évaluation de la donnée GY1.

La compensation du biais angulaire $\gamma$ ainsi estimé est alors réalisée ici par l'ordinateur 4 en envoyant, via les moyens de communication 44 au boîtier de contrôle 22 du simulateur de mouvements 2, l'opposé de la valeur du biais angulaire $\gamma$ ainsi évalué (étape E80).

Sur réception de l'opposé de la valeur l'angle $\gamma$, le simulateur de mouvements 2 applique cette valeur à la centrale inertielle 31, de sorte à modifier sa position de référence Pref' et à corriger le biais angulaire en cap existant avec le référentiel terrestre. La nouvelle position de référence Pref" de la centrale inertielle 31 est alors harmonisée par rapport au nord géographique.

En variante, l'incorporation de l'angle (-$\gamma$) dans le boîtier de contrôle 22 peut être effectuée par un opérateur.

Cette étape clôture la phase $\Phi$2. A l'issue de cette phase, les axes de la centrale inertielle 31, et donc ceux du simulateur de mouvements 2, sont harmonisés avec la verticale du lieu et avec le nord géographique, c'est-à-dire avec le référentiel terrestre.

On notera que l'harmonisation du référentiel du simulateur de mouvements est réalisée ici en envoyant au simulateur de mouvements l'opposé des valeurs des biais angulaires $\alpha$, $\beta$ et $\gamma$ évalués via l'invention, de sorte que celui-ci puisse les prendre en compte dans ses commandes numériques lorsqu'il applique des mouvements sur la centrale inertielle 31, ou plus généralement sur les mobiles qu'il embarque. Toutefois d'autres façons de compenser les biais angulaires en site, en devers et en cap pourraient être envisagées.

**Revendications**

1. Procédé d'harmonisation par rapport à un référentiel terrestre d'un référentiel d'un positionneur angulaire (2) apte à recevoir un mobile ou un engin volant, ledit positionneur angulaire embarquant un dispositif de mesure (31) d'informations inertielles dudit mobile ou engin volant, les axes du positionneur angulaire (2) et du dispositif de mesure (31) d'informations inertielles étant parallèles ou confondus ou ayant entre eux un ou plusieurs écarts angulaires connus, le procédé comportant :

   - une étape d'obtention (E20), à partir d'informations inertielles mesurées (E10) par le dispositif de mesure (31) durant une première période de fonctionnement (T1) prédéterminée du dispositif de mesure (31) pendant laquelle le dispositif de mesure se trouve dans une position dite de référence (Pref), de données représentatives d'une intensité de pesanteur locale vue par le dispositif de mesure, le positionneur angulaire étant maintenu fixe pendant ladite période de fonctionnement et maintenu fixe ledit dispositif de mesure dans ladite position de référence (Pref), les données représentatives d'une intensité de pesanteur locale vue par le dispositif de mesure étant obtenues en cumulant lesdites informations inertielles mesurées sur ladite première période de fonctionnement ;
   - une étape d'évaluation (E30) d'un biais angulaire en site et d'un biais angulaire en devers ($\alpha,\beta$) affectant le référentiel du positionneur à partir des données obtenues ; et
   - une étape d'harmonisation (E40) du référentiel du positionneur par rapport au référentiel terrestre en compensant lesdits biais angulaires en site et en devers ainsi évalués.

2. Procédé d'harmonisation selon la revendication 1 **caractérisé en ce que** ladite étape d'harmonisation comprend une application desdits biais angulaires en site et en devers évalués au dispositif de mesure conduisant à une modification de la position de référence du dispositif de mesure, ledit procédé d'harmonisation comprenant en outre :

   - une étape d'obtention (E60), à partir d'informations inertielles mesurées (E50) par le dispositif de mesure (31) durant une deuxième période de fonctionnement (T2) prédéterminée du dispositif de mesure (31) pendant laquelle le dispositif de mesure se trouve dans la position de référence modifiée (Pref'), de données représentatives d'une vitesse de rotation terrestre, le positionneur angulaire étant maintenu fixe pendant ladite deuxième période de fonctionnement et maintenu fixe ledit dispositif de mesure dans ladite position de référence modifiée (Pref'), les données représentatives d'une vitesse de rotation terrestre vue par le dispositif de mesure étant obtenues en cumulant lesdites informations inertielles mesurées sur ladite deuxième période de fonctionnement ;
   - une étape d'évaluation (E70) d'un biais angulaire ($\gamma$) en cap affectant le référentiel du positionneur à partir de ces données ; et
   - une étape d'harmonisation (E80) du référentiel du positionneur par rapport au référentiel terrestre en compensant ledit biais angulaire en cap ainsi évalué.

3. Procédé d'harmonisation selon la revendication 1, **caractérisé en ce que** ledit positionneur angulaire est un simulateur de mouvements ou un banc de contrôle ou une table micrométrique.

4. Procédé d'harmonisation selon la revendication 1 **caractérisé en ce que** les informations inertielles sont mesurées à l'aide d'au moins un accéléromètre et/ou d'au moins un gyromètre équipant le dispositif de mesure.

5. Système d'harmonisation (1), par rapport à un référentiel terrestre, d'un référentiel d'un positionneur angulaire (2) apte à recevoir un mobile ou un engin volant, ledit positionneur angulaire embarquant un dispositif de mesure (31) d'informations inertielles dudit mobile ou engin volant, les axes du positionneur angulaire (2) et du dispositif de mesure (31) d'informations inertielles étant parallèles ou confondus ou ayant entre eux un ou plusieurs écarts angulaires connus, le système comportant :

   - des moyens d'obtention, à partir d'informations inertielles mesurées par le dispositif de mesure durant une première période de fonctionnement (T1) prédéterminée du dispositif de mesure (31) pendant laquelle le dispositif de mesure se trouve dans une position dite de référence (Pref), de données représentatives d'une intensité de pesanteur locale vue par le dispositif de mesure, le positionneur angulaire (2) étant maintenu fixe pendant ladite première période de fonctionnement et maintenant fixe ledit dispositif de mesure dans ladite position de référence (Pref), lesdits moyens d'obtention étant aptes à obtenir les données représentatives d'une intensité de pesanteur locale vue par le dispositif de mesure en cumulant lesdites informations inertielles mesurées sur ladite première période de fonctionnement ;

- des moyens d'évaluation d'un biais angulaire en site et d'un biais angulaire en devers affectant le référentiel du positionneur à partir des données obtenues ; et

- des moyens d'harmonisation du référentiel du positionneur par rapport au référentiel terrestre comprenant des moyens de compensation desdits biais angulaires en site et en devers ainsi évalués.

**6.** Système d'harmonisation selon la revendication 5 **caractérisé en ce que** les moyens d'harmonisation sont aptes à appliquer lesdits biais angulaires en site et en devers évalués au dispositif de mesure conduisant à une modification de la position de référence du dispositif de mesure, et **en ce que** :

- les moyens d'obtention sont aptes à obtenir des données représentatives d'une vitesse de rotation terrestre à partir d'informations inertielles mesurées par le dispositif de mesure (31) durant une deuxième période de fonctionnement (T2) prédéterminée du dispositif de mesure (31) pendant laquelle le dispositif de mesure se trouve dans la position de référence modifiée (Pref'), le positionneur angulaire étant maintenu fixe pendant ladite deuxième période de fonctionnement et maintenant fixe ledit dispositif de mesure dans ladite position de référence modifiée (Pref') et les données représentatives dd'une vitesse de rotation terrestre vue par le dispositif de mesure étant obtenues en cumulant lesdites informations inertielles mesurées sur ladite deuxième période de fonctionnement;

- les moyens d'évaluation sont aptes à évaluer un biais angulaire en cap à partir de ces données ; et

- les moyens d'harmonisation sont aptes à compenser ledit biais angulaire en cap ainsi évalué.

**7.** Système d'harmonisation selon la revendication 6 **caractérisé en ce que** ledit positionneur angulaire est un simulateur de mouvements ou un banc de contrôle ou une table micrométrique.

**8.** Système d'harmonisation selon la revendication 6 **caractérisé en ce que** les informations inertielles sont mesurées à l'aide d'au moins un accéléromètre et/ou d'au moins un gyromètre équipant le dispositif de mesure.

**9.** Programme d'ordinateur comportant des instructions pour l'exécution des étapes du procédé d'harmonisation selon l'une quelconque des revendications 1 à 4 lorsque ledit programme est exécuté par un ordinateur.

**10.** Support d'enregistrement lisible par un ordinateur sur lequel est enregistré un programme d'ordinateur comprenant des instructions pour l'exécution des étapes du procédé d'harmonisation selon l'une quelconque des revendications 1 à 4.

**Patentansprüche**

**1.** Verfahren zur Harmonisierung eines Referenzsystems eines Winkelpositionierers (2) in Bezug auf ein Erdreferenzsystem, wobei der Winkelpositionierer dazu geeignet ist, einen mobilen oder einen Flugkörper aufzunehmen, und eine Messvorrichtung (31) für Trägheitsinformationen des mobilen oder Flugkörpers an Bord trägt, wobei die Achsen des Winkelpositionierers (2) und der Messvorrichtung (31) für Trägheitsinformationen parallel sind oder zusammenfallen oder zwischen einander eine oder mehrere bekannte Winkelabweichungen aufweisen, wobei das Verfahren umfasst:

- einen Schritt des Erhaltens (E20) von Daten, welche eine Intensität der von der Messvorrichtung erfahrenen lokalen Erdanziehung darstellen, ausgehend von Trägheitsinformationen, die durch die Messvorrichtung (31) während einer ersten vorbestimmten Funktionsperiode (T1) der Messvorrichtung (31) gemessen (E10) werden, während der sich die Messvorrichtung in einer als Referenzposition (Pref) bezeichneten Position befindet, wobei der Winkelpositionierer während der Funktionsperiode fixiert gehalten wird und die Messvorrichtung in der Referenzposition (Pref) fixiert hält und die Daten, welche eine Intensität der von der Messvorrichtung erfahrenen lokalen Erdanziehung darstellen, erhalten werden, indem die über die erste Funktionsperiode gemessenen Trägheitsinformationen summiert werden,

- einen Schritt des Auswertens (E30) eines Zielhöhen-Winkeloffsets und eines Schrägwinkeloffsets ($\alpha$, $\beta$), welche das Referenzsystem des Positionierers beeinflussen, ausgehend von den erhaltenen Daten, und

- einen Schritt des Harmonisierens (E40) des Referensystems des Positionierers in Bezug auf das Erdreferenzsystem durch Kompensieren der so ausgewerteten Zielhöhen- und Schrägwinkeloffsets.

2. Verfahren zur Harmonisierung nach Anspruch 1, **dadurch gekennzeichnet, dass** der Schritt des Harmonisierens eine Anwendung der ausgewerteten Zielhöhen- und Schrägwinkeloffsets auf die Messvorrichtung umfasst, was zu einer Modifikation der Referenzposition der Messvorrichtung führt, wobei das Verfahren zur Harmonisierung ferner umfasst:

- einen Schritt des Erhaltens (E60) von Daten, welche eine Geschwindigkeit der Erdrotation darstellen, ausgehend von Trägheitsinformationen, die durch die Messvorrichtung (31) während einer zweiten vorbestimmten Funktionsperiode (T2) der Messvorrichtung (31) gemessen (E50) werden, während der sich die Messvorrichtung in der modifizierten Referenzposition (Pref') befindet, wobei der Winkelpositionierer während der zweiten Funktionsperiode fixiert gehalten wird und die Messvorrichtung in der modifizierten Referenzposition (Pref') fixiert hält und die Daten, welche eine Geschwindigkeit der von der Messvorrichtung erfahrenen Erdrotation darstellen, erhalten werden, indem die über die zweite Funktionsperiode gemessenen Trägheitsinformationen summiert werden,
- einen Schritt des Auswertens (E70) eines Kurswinkeloffsets ($\gamma$), der das Referenzsystem des Positionierers beeinflusst, ausgehend von diesen Daten, und
- einen Schritt des Harmonisierens (E80) des Referenzsystems des Positionierers in Bezug auf das Erdreferenzsystem durch Kompensieren des so ausgewerteten Kurswinkeloffsets.

3. Verfahren zur Harmonisierung nach Anspruch 1, **dadurch gekennzeichnet, dass** der Winkelpositionierer ein Bahnsimulator oder eine Prüfbank oder eine mikrometrische Tabelle ist.

4. Verfahren zur Harmonisierung nach Anspruch 1, **dadurch gekennzeichnet, dass** die Trägheitsinformationen mithilfe zumindest eines Beschleunigungsmessers und/oder zumindest eines Gyrometers gemessen werden, mit welchem/n die Messvorrichtung ausgestattet ist.

5. System (1) zur Harmonisierung eines Referenzsystems eines Winkelpositionierers (2) in Bezug auf ein Erdreferenzsystem, wobei der Winkelpositionierer dazu geeignet ist, einen mobilen oder einen Flugkörper aufzunehmen und eine Messvorrichtung (31) für Trägheitsinformationen des mobilen oder Flugkörpers an Bord trägt, wobei die Achsen des Winkelpositionierers (2) und der Messvorrichtung (31) für Trägheitsinformationen parallel sind oder zusammenfallen oder zwischen einander eine oder mehrere bekannte Winkelabweichungen aufweisen, wobei das System umfasst:

- Mittel zum Erhalten von Daten, welche eine Intensität der von der Messvorrichtung erfahrenen lokalen Erdanziehung darstellen, ausgehend von Trägheitsinformationen, die durch die Messvorrichtung während einer ersten vorbestimmten Funktionsperiode (T1) der Messvorrichtung (31) gemessen werden, während der sich die Messvorrichtung in einer als Referenzposition (Pref) bezeichneten Position befindet, wobei der Winkelpositionierer (2) während der ersten Funktionsperiode fixiert gehalten wird und die Messvorrichtung in der Referenzposition (Pref) fixiert hält, wobei die Mittel zum Erhalt dazu geeignet sind, die Daten, welche eine Intensität der von der Messvorrichtung erfahrenen lokalen Erdanziehung darstellen, zu erhalten, indem die über die erste Funktionsperiode gemessenen Trägheitsinformationen summiert werden;
- Mittel zum Auswerten eines Zielhöhen-Winkeloffsets und eines Schrägwinkeloffsets, welche das Referenzsystem des Positionierers beeinflussen, ausgehend von den erhaltenen Daten, und
- Mittel zum Harmonisieren des Referenzsystems des Positionierers in Bezug auf das Erdreferenzsystem, die Mittel zur Kompensation der so ausgewerteten Zielhöhen- und Schrägwinkeloffsets umfassen.

6. System zur Harmonisierung nach Anspruch 5, **dadurch gekennzeichnet, dass** die Mittel zur Harmonisierung dazu geeignet sind, die ausgewerteten Zielhöhen- und Schrägwinkeloffsets auf die Messvorrichtung anzuwenden, was zu einer Modifikation der Referenzposition der Messvorrichtung führt, und dass:

- die Mittel zum Erhalten dazu geeignet sind, Daten, welche eine Geschwindigkeit der Erdrotation darstellen, ausgehend von Trägheitsinformationen zu erhalten, die durch die Messvorrichtung (31) während einer zweiten vorbestimmten Funktionsperiode (T2) der Messvorrichtung (31) gemessen werden, während der sich die Messvorrichtung in der modifizierten Referenzposition (Pref') befindet, wobei der Winkelpositionierer während der zweiten Funktionsperiode fixiert gehalten wird und die Messvorrichtung in der modifizierten Referenzposition (Pref') fixiert hält und die Daten, welche eine Geschwindigkeit der von der Messvorrichtung erfahrenen Erdrotation darstellen, erhalten werden, indem die über die zweite Funktionsperiode gemessenen Trägheitsinformationen summiert werden,
- die Mittel zum Auswerten dazu geeignet sind, einen Kurswinkeloffset ausgehend von diesen Daten auszuwerten, und
- die Mittel zum Harmonisieren dazu geeignet sind, den so ausgewerteten Kurswinkeloffset zu kompensieren.

**7.** System zur Harmonisierung nach Anspruch 6, **dadurch gekennzeichnet, dass** der Winkelpositionierer ein Bahnsimulator oder eine Prüfbank oder eine mikrometrische Tabelle ist.

**8.** System zur Harmonisierung nach Anspruch 6, **dadurch gekennzeichnet, dass** die Trägheitsinformationen mithilfe zumindest eines Beschleunigungsmessers und/oder zumindest eines Gyrometers gemessen werden, mit welchem/n die Messvorrichtung ausgestattet ist.

**9.** Computerprogramm, das Anweisungen zur Ausführung der Schritte des Verfahrens zur Harmonisierung nach einem der Ansprüche 1 bis 4 umfasst, wenn das Programm von einem Computer ausgeführt wird.

**10.** Computerlesbarer Datenträger, auf welchem ein Computerprogramm gespeichert ist, das Anweisungen zur Ausführung der Schritte des Verfahrens zur Harmonisierung nach einem der Ansprüche 1 bis 4 umfasst.

**Claims**

**1.** A harmonization method for harmonizing a frame of reference of an angular positioner (2) suitable for receiving a moving body or a flying vehicle relative to the terrestrial frame of reference, said angular positioner carrying a measurement device (31) for taking inertial measurements of said moving body or flying vehicle, wherein the axes of the movement simulator (2) and the axes of the measurement device (31) for taking inertial measurements are parallel or coincide or differ from each other by one or more known angular differences, the method comprising:

• an obtaining step (E20) of using (E10) inertial measurements taken by the measurement device (31) during one first predetermined operating period (T1) of the measurement device (31) during which the measurement device is in a reference position (Pref) to obtain values representative of a local magnitude of gravity as perceived by the measurement device, the angular positioner being held stationary during said operating period and holding stationary said measurement device in said reference position (Pref), the values representative of a local magnitude of gravity as perceived by the measurement device being obtained by summing said inertial measurements taken over said first operating period;
• an evaluation step (E30) of using the values obtained to evaluate one angular bias in elevation and one angular bias in cant ($\alpha$, $\beta$) affecting the frame of reference of the positioner; and
• a harmonization step (E40) of harmonizing the frame of reference of the positioner relative to the terrestrial frame of reference by compensating for said angular bias in elevation and for said angular bias in cant as evaluated in this way.

**2.** A harmonization method according to claim 1, **characterized in that** said harmonization step comprises applying said angular bias in elevation and said angular bias in cant to the inertial unit, said application resulting in a modification of the reference position of the measurement device, the harmonization method further comprising:

- an obtaining step (E60) of obtaining, from inertial information measured during a second predetermined operating period (T2) of the measurement device (31) during which the measurement device is in the modified reference position (Pref'), of values representative of the speed of rotation of the earth, the angular positioner being held stationary during said at second operating period and holding stationary said measurement device in said modified reference position (Pref'), the values representative of a speed of rotation of the earth as perceived by the measurement device being obtained by summing said inertial measurements taken over said second operating period;
- an evaluation step (E70) of obtaining, from these values, an angular bias ($\gamma$) in heading affecting the reference frame of the positioner

- a harmonization step (E80) of harmonizing the frame of reference of the positioner relative to the terrestrial frame of reference by compensating for said at least one angular bias in heading as evaluated in this way.

**3.** A harmonization method according to claim 1, **characterized in that** said angular positioner is a movement simulator or a test bench or a micrometric table.

**4.** A harmonization method according to claim 1, **characterized in that** the inertial measurements are taken with the help of at least one accelerometer and/or at least one gyro fitted to the measurement device.

**5.** A harmonization system (1) for harmonizing a frame of reference of an angular positioner (2) suitable for receiving a moving body or a flying vehicle relative to a terrestrial frame of reference, said angular positioner carrying a measurement device (31) for taking inertial measurements of said moving body or flying vehicle, the axes of the movement simulator (2) and the axes of the measurement device (31) for taking inertial measurements being parallel or coinciding or differing from each other by one or more known angular differences, the system comprising:

• obtaining means for using the inertial measurements taken by the measurement device during a first predetermined operating period (T1) of the measurement device (31) during which the measurement device is in a reference position (Pref) to obtain values representative of a local magnitude of gravity as perceived by the measurement device, the angular positioner (2) being held stationary during said first operating period and holding stationary said measurement device in said reference position (Pref), said obtaining means being suitable for obtaining the values representative of a local magnitude of gravity as perceived by the measurement device by summing said inertial measurements taken over said at first operating period;

• evaluation means for evaluating an angular bias in elevation and an angular bias in cant affecting the frame of reference of the positioner on the basis of the values obtained; and

• harmonization means for harmonizing the frame of reference of the positioner relative to the terrestrial frame of reference and including means for compensating for said angular bias in elevation and for said angular bias in cant as evaluated in this way.

**6.** A harmonization system according to claim 5, **characterized in that** said harmonization means are suitable for applying said evaluated angular bias in elevation and said evaluated angular bias in cant to the inertial unit resulting in a modification of the reference position of the measurement device and **in that**:

the obtaining means are suitable for obtaining values representative of a speed of rotation of the earth from inertial information measured during a second predetermined operating period (T2) of the measurement device (31) during which the measurement device is in the modified reference position (Pref'), the angular positioner being held stationary during said second operating period and holding stationary said measurement device in said modified reference position (Pref'), the values representative of a speed of rotation of the earth as perceived by the measurement device being obtained by summing said inertial measurements taken over said second operating period;

- the evaluation means are suitable for evaluating an angular bias in heading from these values; and
- the harmonization means are suitable for compensating for the angular bias in heading as evaluated in this way.

**7.** A harmonization system according to claim 6, **characterized in that** said angular positioner is a movement simulator, or a test bench, or a micrometric table.

**8.** A harmonization system according to claim 6, **characterized in that** the inertial measurements are taken with the help of at least one accelerometer and/or of at least one gyro fitted to the measurement device.

**9.** A computer program including instructions for executing steps of the harmonization method according to any one of claims 1 to 4 when said program is executed by a computer.

**10.** A computer-readable recording medium having a recording of a computer program including instructions for executing steps of the harmonization method according to any one of claims 1 to 4.

FIG.1

ACQUISITION DE MESURES ISSUES DES ACCELEROMETRES DE LA CENTRALE INERTIELLE 31 PENDANT LA PERIODE T1, LE SIMULATEUR DE MOUVEMENTS 2 ETANT IMMOBILE — E10

CUMUL DES MESURES ACQUISES SUR LES AXES X, Y ET Z PENDANT T1 — E20

Ø1

CALCUL DES BIAIS $\alpha$ ET $\beta$ EN SITE ET EN DEVERS — E30

COMPENSATION DES BIAIS $\alpha$ ET $\beta$ — E40

ACQUISITION DES MESURES ISSUES DES GYROMETRES DE LA CENTRALE INERTIELLE 31 PENDANT LA PERIODE T2, LE SIMULATEUR DE MOUVEMENTS 2 RESTANT IMMOBILE — E50

**FIG.2**

CUMUL DES MESURES ACQUISES SUR LES AXES X, Y ET Z PENDANT T2 — E60

Ø2

CALCUL DU BIAIS $\gamma$ EN CAP — E70

COMPENSATION DU BIAIS $\gamma$ — E80

FIG.3A

FIG.3B

FIG.4A

FIG.4B

FIG.4C

FIG.5A

FIG.5B

FIG.6A

FIG.6B

FIG.6C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2927418
- US 2002178815 A
- US 3597288 A